# EUROPEAN PATENT APPLICATION

(11) **EP 1 783 947 A1**
(43) Date of publication of application: **09.05.2007**
(21) Application number: 05770365.4
(22) Date of filing: 09.08.2005
(51) Int. Cl.: H04L 9/00

(54) **TRANSMITTING APPARATUS AND RECEIVING APPARATUS**

(30) Priority: 16.08.2004 JP 2004236493; 08.10.2004 JP 2004296498; 15.04.2005 JP 2005118483
(71) Applicant: Matsushita Electric Industrial Co., Ltd., Kadoma-shi, Osaka 571-8501 (JP)
(72) Inventor: UENO, Takafumi c/o Matsushita El.Ind.Co.Ltd., Chuo-ku, Osaka-shi, Osaka 540-6319 (JP)
(74) Representative: Keck, Stephan
(86) International application number: PCT/JP2005/014575
(87) International publication number: WO 2006/019012

(57) **Abstract**

A transmitter of the present invention includes: an encrypting unit operable to encrypt at least one of digital AV information and descriptor information relating to the digital AV information, and to generate encrypted information; a tool list generating unit operable to generate tool list information having a tool ID indicating a tool required for decrypting the encrypted information; a control graph generating unit operable to generate control graph information indicating an incorporating position of the tool in a receiver; an IPMP protection information generating unit operable to generate IPMP descriptor information for describing the tool list information and the control graph information with a descriptor having a name space indicating IPMP or IPMP protection information; and a packaging unit operable to package the digital AV information including the encrypted information and the IPMP descriptor information, and outputting package information.

## Description

### TECHNICAL FIELD

The present invention relates to a transmitting apparatus which transmits signals including IPMP descriptor information relating to digitized video information and audio information safely, and a receiving apparatus which receives the same signals safely.

### BACKGROUND ART

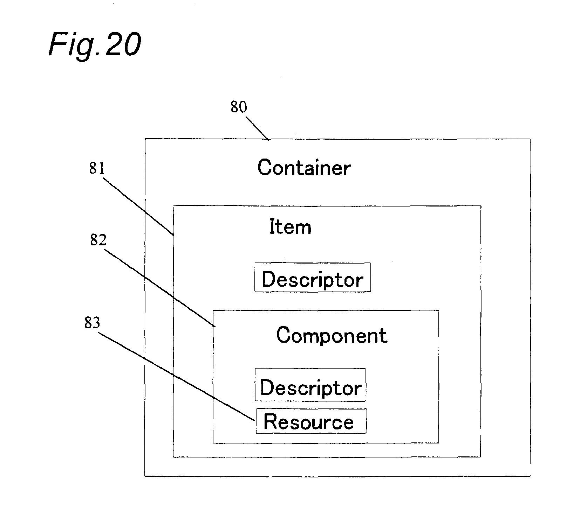

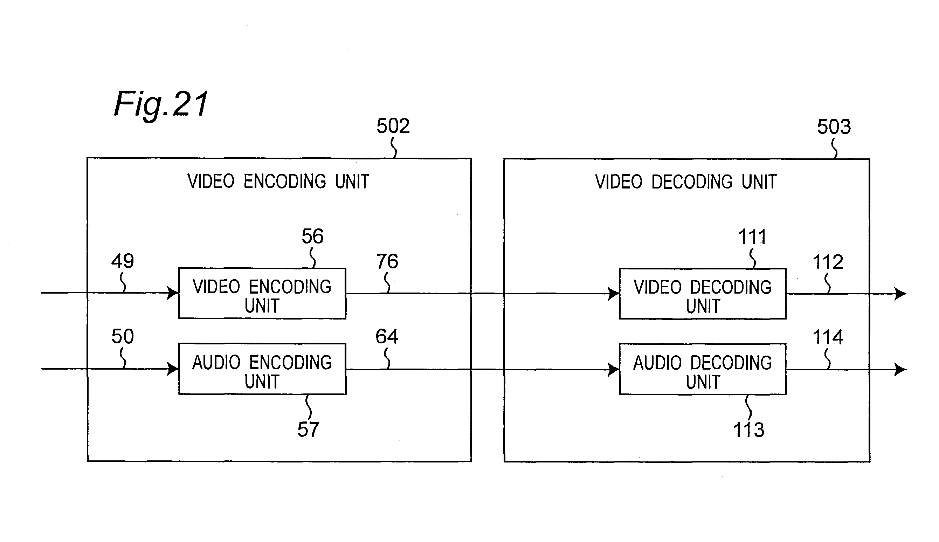

MPEG-21 is an effort to provide a general framework for realizing an environment to use contents (data) over networks. Further, MPEG-21 defines a digital item (hereinafter abbreviated as DI). The DI is a minimum distribution unit of contents flowing in a multimedia framework in MPEG-21. Specifically, the DI is one in which multimedia data (resources) expressed in a standard encoding method such as MPEG-1, 2, 4 and a standard metadata schemer defined in MPEG-7 and the like are structured by the XML schemer defined in MPEG-21 independently and combined. Fig. 20 is a schematic diagram showing the configuration of conventional package information. Fig. 21 is a schematic diagram showing the configurations of conventional transmitter and receiver for transmitting and receiving digitized video information and audio information. Fig. 20 shows an inclusion relationship among respective descriptor elements defined in MPEG-21, DI, <container>, <Item>, <Component>, and <Resource>. As shown in Fig. 20, <Container> 80 includes <Item> 81, and <Item> 81 includes <Component> 82. Further, <Component> 82 includes <Resource> 83.

The DI is one in which multimedia data and metadata are structured in XML schemer. In Fig. 20, DI gives a definition part of the DI described in XML. Here, <Container>, <Item>, <Component>, <Resource> and the like are defined.

<Container>, <Item> and <Component>, among them, have an inclusion relationship with one another. <Container> brings plural pieces of <Item> and <Container> into one with the descriptor <Descryptor>. <Item> brings <Component> and another <Item> into one with the descriptor <Descryptor>. <Component> designates <Resource> constituting the <Component> thereof. <Resource> designates various pieces of multimedia data such as video clips and images by using URL or the like.

Fig. 21 is a block diagram showing the configurations of conventional transmitter 502 and receiver 503. In Fig. 21, the transmitter 502 includes a video encoding unit 56 conforming to MPEG-2 Video (ISO/IEC13818-2) and an audio encoding unit 57 conforming to MPEG-2 Audio (ISO/IEC13818-3). Further, the receiver 503 includes a video decoding unit 111 and an audio decoding unit 113.

As shown in Fig. 21, in the conventional transmitter 502, an inputted digital video signal 49 is compressed and encoded by the video encoding unit 56 in conformity with MPEG-2 Video, and outputted as a video bit-stream 76. An inputted digital audio signal 50 is compressed and encoded by the audio encoding unit 57, and outputted as an audio bit-stream 64.

In the conventional receiver 503, the video bit-stream 76 is expanded by the video decoding unit 111 and outputted as a digital video signal 112. The audio bit-stream 64 is expanded by the audio decoding unit 113 and outputted as a digital audio signal 114.

Here, it is important how to protect the data. In the past, MPEG-2/4 IPMP extension was standardized in order to protect data conforming to MPEG-2/4 System. Further, in MPEG-21 Part 4, it is going to be discussed in MPEG-21 IPMP (Intellectual Property Management and Protection).

It is noted that ISO/IEC13818-2, ISO/IEC13818-3, and ISO/IEC13818-11 FDIS are issued.

### SUMMARY OF THE INVENTION

In MPEG-21, however, discussions about methods of encrypting and protecting video bit-streams and the like have just been started, so they have not been defined yet. Therefore, there might be a case where video bit-streams or the like which are not protected are stolen easily by an unauthorized receiver. Further, even if they are encrypted, no action has been taken against unauthorized decryption of the encryption method itself. That is, there is a problem that there is no means to prevent unauthorized reception of data transmitted from a transmitter. Further, data includes cases where copyright protection is required and contents that copyright protection is not required. In the description of the conventional example, however, there has been a problem that it is impossible to describe whether copyright protection is taken or not, and it is also impossible to describe details of copyright protection.

Considering the problems described above, an object of the present invention is to provide a protection unit with which a receiver safely receives data transmitted from a transmitter.

According to the present invention, a transmitter includes: an encrypting unit operable to encrypt at least one of digital AV information and descriptor information relating to the digital AV information, and generate encrypted information; a tool list generating unit operable to generate tool list information having a tool ID showing a tool required for decrypting the encrypted information; a tool relating information generating unit operable to generate tool relating information relating to the tool; an IPMP protection information generating unit operable to generate IPMP descriptor information for describing the tool list information and the tool relating information with a descriptor having a name space indicating IPMP or IPMP protection information; a packaging unit operable to package the digital AV information including the encrypted information and the IPMP descriptor information, and outputting package information.

The tool relating information may be control graph information indicating an incorporating position of the tool in a receiver. In this case, the tool relating information generating unit is a control graph generating unit operable to generate the control graph information.

Further, the tool relating information may be configuration information indicating the configuration of the tool. In this case, the tool relating information generating unit is a configuration information generating unit operable to generate the configuration information.

Further, a child element showing the control graph information may be provided below the name space indicating the IPMP or the name space indicating the IPMP protection information.

Further, a child element including the configuration information may be provided below the name space indicating the IPMP or the name space indicating the IPMP protection information.

Moreover, a child element showing the tool list information may be provided below the name space indicating the IPMP or the name space indicating the IPMP protection information.

Further, a child element showing the tool ID may be provided below the name space indicating the IPMP or the name space indicating the IPMP protection information.

Further, a child element including rights description may be provided below the name space indicating the IPMP or the name space indicating the IPMP protection information.

Further, a child element including key information may be provided below the name space indicating the IPMP or the name space indicating the IPMP protection information.

Further, it is a transmitter including a child element including license information below the name space indicating the IPMP and the name space indicating the IPMP protection information.

Further, the configuration information may include one indicating the manufacturer of a receiver.

According to the present invention, a receiver includes: a package information receiving unit operable to receive package information including digital AV information and descriptor information relating to the digital AV information, and extracti the digital AV information including encrypted information, MPEG-21 DID information and IPMP descriptor information having a name space indicating IPMP or IPMP protection information; a MPEG-21 DID receiving unit operable to receive MPEG -21 DID; and an IPMP protection information extracting unit operable to extract, from the IPMP descriptor information, IPMP protection information including tool list information having a tool ID indicating a decryption tool for decrypting the encrypted information and tool relating information relating to the decryption tool. The decryption tool is obtained in accordance with the tool ID acquired from the tool list information, and the decryption tool is incorporated in accordance with the tool relating information.

The tool relating information may be control graph information indicating an incorporating position of the decryption tool in the receiver. Further, the tool relating information may be configuration information showing the configuration of the decryption tool. Note that the configuration information may indicate the manufacturer of the receiver.

Further, the receiver may include a rights information separating unit operable to separate rights information relating to reproduction and duplication on the receiving side from the digital AV information. In this case, the digital AV information can be processed in accordance with the rights information.

Further, the receiver may include key information separating unit operable to decrypt encrypted information received on the receiver side from the digital AV information. In this case, the encrypted information can be decrypted by the key information to thereby extract the digital AV information.

Further, the receiver may include a license information separating unit operable to separate license information from the digital AV information. In this case, the digital AV information can be processed in accordance with the license information.

Note that the present invention may have following configurations shown in various embodiments besides the configuration described above.

According to a first configuration, a transmitter includes: an encrypting unit operable to encrypt at least one of digital AV information and descriptor information relating to the digital AV information by using tool information having a tool ID defined in advance, and generate encrypted information; a tool list generating unit operable to genera te tool list information having a tool ID indicating a tool required for decrypting the encrypted information; a control graph generating unit operable to generate control graph information indicating an incorporating position of the tool in a receiver; an IPMP protection information generating unit operable to generate IPMP protection information including the tool list information and the control graph information; a packaging unit operable to package the digital AV information and the descriptor information; and a DID information generating unit operable to include a descriptor including the IPMP protection information in DID (Digital Item Declaration) in MPEG-21, and in the case by the IPMP protection, to generate DID having IPMP descriptor information describing the tool list information and the control graph information with a descriptor having a name space indicating IPMP or IPMP protection information.

According to a second configuration, a transmitter includes: an encrypting unit operable to encrypt at least one of digital AV information and descriptor information relating to the digital AV information by using tool information having a tool ID defined in advance, and generate encrypted information; a tool list generating unit operable to generate tool list information having a tool ID showing a tool required for decrypting the encrypted information; a control graph generating unit operable to generate control graph information indicating an incorporating position of the tool in a receiver; an IPMP protection information generating unit operable to generate IPMP protection information including the tool list information and the control graph information; a packaging unit operable to package the digital AV information and the descriptor information; and an IPMP protection information generating unit, in the case by the IPMP protection, which generates IPMP descriptor information describing the tool list information and the control graph information with a descriptor having a name space indicating IPMP or the IPMP protection information.

According to a third configuration, a transmitter includes: an encrypting unit operable to encrypt at least one of digital AV information and descriptor information relating to the digital AV information by using tool information having a tool ID defined in advance, and generating encrypted information; a tool list generating unit operable to generate tool list information having a tool ID indicating a tool required for decrypting the encrypted information; a configuration information generating unit operable to generate configuration information indicating the configuration of the tool; an IPMP protection information generating unit operable to generate IPMP protection information including the tool list information and the configuration information; a packaging unit operable to package the digital AV information and the descriptor information; and a DID information generating unit operable to include a descriptor including the IPMP protection information in DID (Digital Item Declaration) in MPEG-21, and in the case by the IPMP protection, to generates DID having IPMP descriptor information describing the tool list information and the configuration information with a descriptor having a name space indicating IPMP or IPMP protection information.

According to a fourth configuration, a transmitter includes: an encrypting unit operable to encrypt at least one of digital AV information and descriptor information relating to the digital AV information by using tool information having a tool ID defined in advance, and generating encrypted information; a tool list generating unit operable to generate tool list information having a tool ID indicating a tool required for decrypting the encrypted information; a configuration information genera ting unit operable to generate configuration information indicating the configuration of the tool; an IPMP protection information generating unit operable to generate IPMP protection information including the tool list information and the configuration information; a packaging unit operable to package the digital AV information and the descriptor information; and an IPMP protection information generating unit, in the case by the IPMP protection, which generates IPMP descriptor information describing the tool list information and the control graph information with a descriptor having a name space indicating IPMP or the IPMP protection information.

According to a fifth configuration, a receiver includes: a digital AV information receiving unit operable to receive digital AV information and descriptor information relating to the digital AV information, and extracting the digital AV information; a MPEG-21 DID unit operable to receive MPEG-21 DID; a DID information separating unit operable to decipher DID and extract IPMP protection information having a name space indicating IPMP or IPMP protection information; an IPMP protection information extracting unit operable to extract, from the IPMP protection information, IPMP protection information including tool list information having a tool ID indicating a decryption tool operable to decrypt the encrypted data and control graph information indicating the incorporating position of the decryption tool; and a control unit operable to obtain a tool in accordance with the tool ID acquired from the tool list information and incorporating the tool in accordance with the control graph.

According to a sixth configuration, a receiver includes: a receiving unit operable to receive information including digital AV information and descriptor information relating to the digital AV information, and extracting digital AV information, MPEG-21 DID information and IPMP protection information having a name space indicating IPMP or IPMP protection information; a MPEG-21 DID receiving unit operable to receive MPEG-21 DID; an IPMP protection information extracting unit operable to extract, from the IPMP protection information, IPMP protection information including tool list information having a tool ID indicating a decryption tool operable to decrypt the encrypted data and control graph information indicating the incorporating position of the decryption tool in the receiver; and a control unit operable to obtain a tool in accordance with the tool ID acquired from the tool list information and incorporating the tool in accordance with the control graph.

According to a seventh configuration, a receiver includes: a receiving unit operable to receive information including digital AV information and descriptor information relating to the digital AV information, and extracting the digital AV information; a MPEG-21 DID receiving unit operable to receive MPEG-21 DID; a DID information separating unit operable to decipher DID and extract IPMP protection information having a name space indicating IPMP or IPMP protection information; an IPMP protection information extracting unit operable to extract, from the IPMP protection information, IPMP protection information including tool list information having a tool ID indicating a tool required for decrypting encrypted data and configuration information indicating the configuration of the tool; and a control unit operable to obtain a tool in accordance with the tool ID acquired from the tool list information and incorporating the tool in accordance with the configuration information.

According to an eighth configuration, a receiver includes: a receiving unit operable to receive information including digital AV information and descriptor information relating to the digital AV information, and extract the digital AV information, MPEG-21 DID information and IPMP protection information having a name space indicating IPMP or IPMP protection information; a MPEG-21 DID receiving unit operable to receive MPEG -21 DID; and an IPMP protection information extracting unit operable to extract, from the IPMP protection information, IPMP protection information including tool list information having a tool ID indicating a tool required for decrypting the encrypted data and configuration information indicating the configuration of the tool, and a tool is obtained in accordance with the tool ID acquired from the tool list information, and the tool is configured in accordance with the configuration information.

According to a ninth configuration, a receiver includes: a receiving unit operable to receive information including digital AV information and descriptor information relating to the digital AV information, and extract the digital AV information, MPEG-21 DID information and IPMP protection information having a name space indicating IPMP or IPMP protection information; a MPEG-21 DID receiving unit operable to receive MPEG -21 DID; and an IPMP protection information extracting unit operable to extract, from the IPMP protection information, IPMP protection information including configuration information indicating the manufacture of the receiver, and the tool is obtained in accordance with the tool ID acquired from the tool list information, and the tool is incorporated in accordance with the configuration information.

As obvious from the description above, according to the transmitter of the present invention, it is possible to transmit a tool list for decrypting encryption and IPMP protection information as a part of package information with encrypted data. Thereby, the latest protection system can always be provided. Further, since DID information includes IPMP protection information and the description format thereof has a name space indicating IPMP, it is possible to provide a convenience that it can be defined without being mixed with other descriptions.

Further, according to another transmitter of the present invention, it is possible to transmit a tool list for decrypting encryption and IPMP protection information as a part of package information with encrypted data. Thereby, the latest protection system can always be provided. Further, it is possible to provide a convenience of transmitting DID information and IPMP protection information separately. Further, since the description format of IPMP protection information has a name space indicating IPMP, it is possible to provide a convenience that it can be defined without being mixed with other descriptions.

According to the receiver of the present invention, it is possible to update a tool by downloading, to the receiver, MPEG-21 IPMP protection information in which IPMP protection information is defined in DID by separating it from the unprotected case based on the name space indicating IPMP. Thereby, it is possible to provide a receiver having high reliability always capable of keeping the latest protection system.

Further, according to another receiver of the present invention, it is possible to provide a convenience of updating a tool by downloading, to the receiver, IPMP protection information separate from DID information, in which protection information is separated from the unprotected case based on the name space indicating IPMP. Further, it is possible to provide a receiver having high reliability always capable of keeping the latest protection.

### BRIEF DESCRIPTION OF THE DRAWINGS

Fig. 1 is a block diagram showing the configuration of the transmitter according to the embodiment 1 of the present invention;
Fig. 2 is a schematic diagram showing the configuration of the control graph in the embodiment 1 of the present invention;
Fig. 3 is a schematic diagram showing the configuration of package information in the embodiment 1 of the present invention;
Fig. 4 is a schematic diagram showing the configuration of description having an IPMP name space in DID in the embodiment 1 of the present invention;
Fig. 5 is a schematic diagram showing the configuration of description having an IPMP name space in DID in the embodiment 1 of the present invention;
Fig. 6 is a block diagram showing the configuration of the transmitter according to the embodiment 2 of the present invention;
Fig. 7 is a diagram showing the schematic configuration of package information in the embodiment 2 of the present invention;
Fig. 8 is a schematic diagram showing the configuration of description having an IPMP name space in the embodiment 3 of the present invention;
Fig. 9 is a block diagram showing the configuration of the transmitter according to the embodiment 4 of the present invention;
Fig. 10 is a schematic diagram showing the configuration of package information in the embodiment 4 of the present invention.
Fig. 11 is a schematic diagram showing the contents of configuration information in the embodiment 4 of the present invention.
Fig. 12 is a schematic diagram showing the configuration of description having an IPMP name space in the embodiment 4 of the present invention.
Fig. 13 is a block diagram showing the configuration of the receiver according to the embodiment 5 of the present invention.
Fig. 14 is a block diagram showing the configuration of the receiver according to the embodiment 6 of the present invention.
Fig. 15 is a block diagram showing the configuration of the receiver according to the embodiment 7 of the present invention.
Fig. 16 is a flowchart of the transmitting method according to the embodiment 2 of the present invention.
Fig. 17 is a flowchart of the transmitting method according to the embodiment 4 of the present invention.
Fig. 18 is a flowchart of the receiving method according to the embodiment 6 of the present invention.

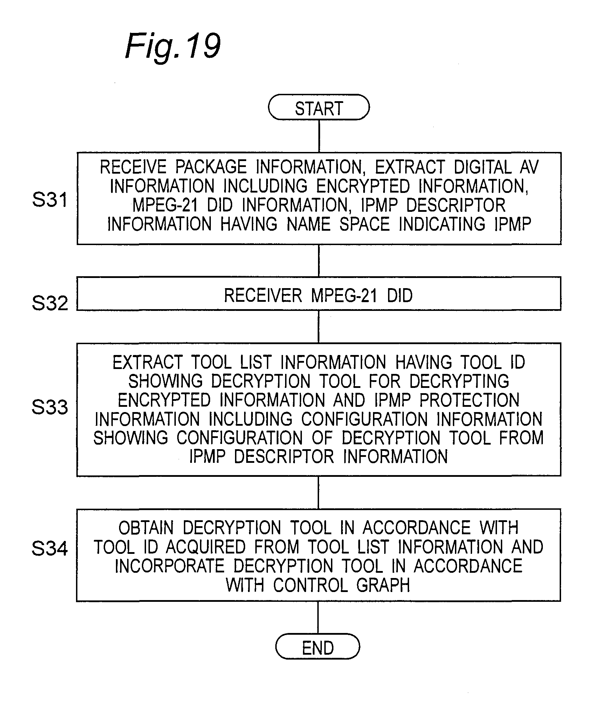

Fig. 19 is a flowchart of the receiving method according to the embodiment 7 of the present invention.
Fig. 20 is a schematic diagram showing the configuration of conventional package information.
Fig. 21 is a block diagram showing the configurations of conventional transmitter and receiver.

### DESCRIPTION OF REFERENCE NUMERALS

- 1: tool list generating unit
- 2: tool list information
- 3: control graph generating unit
- 4: control graph information
- 5: IPMP protection information generating unit
- 6: IPMP protection information
- 7: DID information generating unit
- 8: DID information
- 9, 11: packaging unit
- 10, 12: package information
- 35: name space indicating IPMP and IPMP information
- 36: tool list information
- 37: IPMP control graph
- 38: container
- 56: video encoding unit
- 57: audio encoding unit
- 60: encrypting unit
- 63: encrypted video bit-stream
- 64: audio bit-stream
- 65: tool ID
- 66: control point
- 73, 74, 84: transmitter
- 90: DID information separating unit
- 94: IPMP protection information separating unit
- 100,116,130: receiver
- 104: package information separating unit
- 108: incorporating unit
- 111: video decoding unit
- 113: audio decoding unit
- 115: decryption tool
- 117: authentication tool
- 118: configuration unit
- 119: cryptanalysis tool
- 120: control unit
- 201: configuration information generating unit
- 202: configuration information
- 502: transmitter
- 503: receiver

### DESCRIPTION OF THE PREFERRED EMBODIMENTS

A transmitter and a transmitting method, and a receiver and a receiving method, according to embodiments of the present invention will be explained by using accompanying drawings. Note that substantially same parts in the drawings are denoted by the same reference numerals.

### (Embodiment 1)

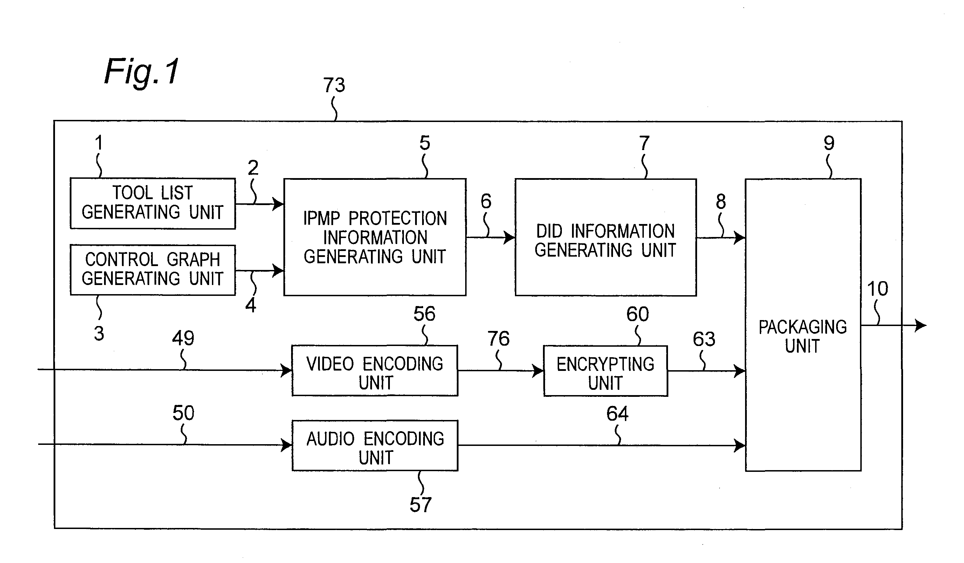

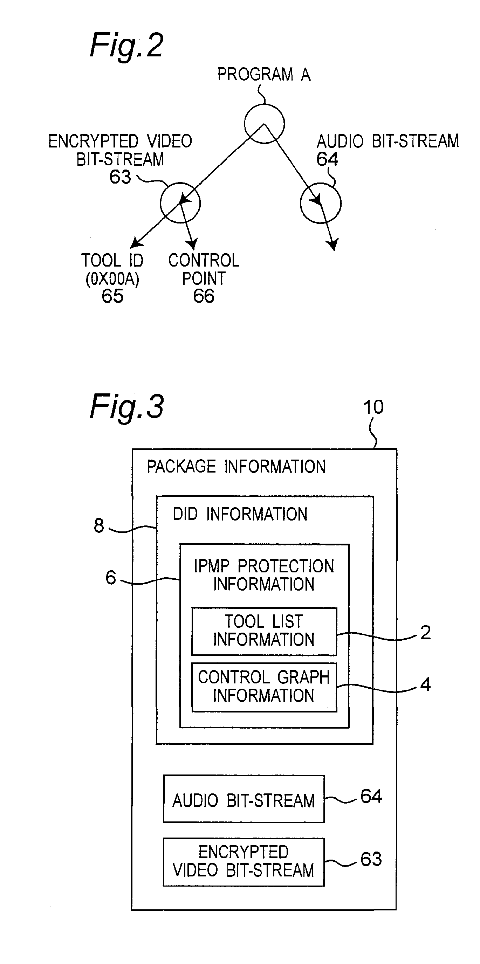

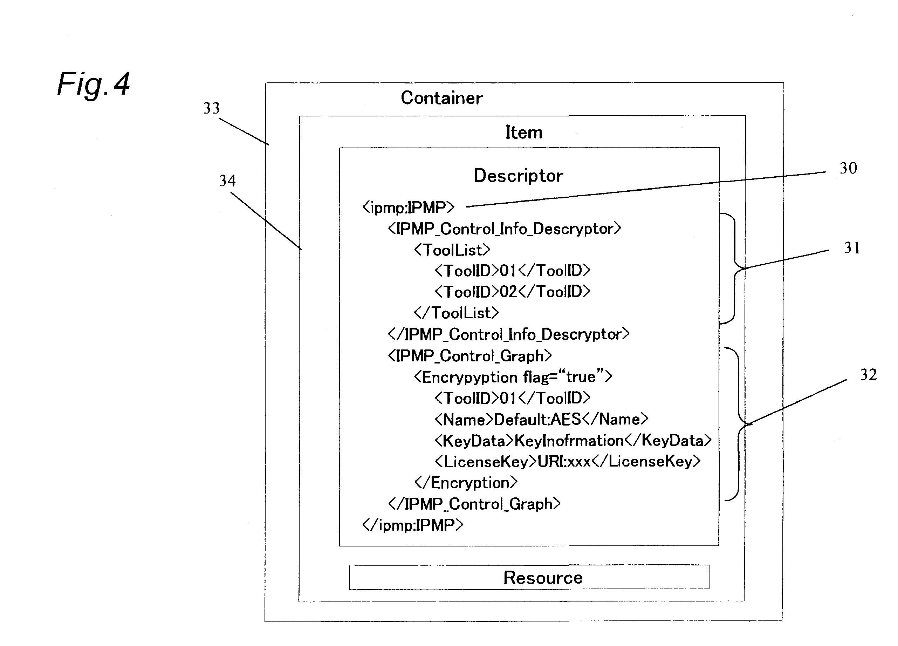

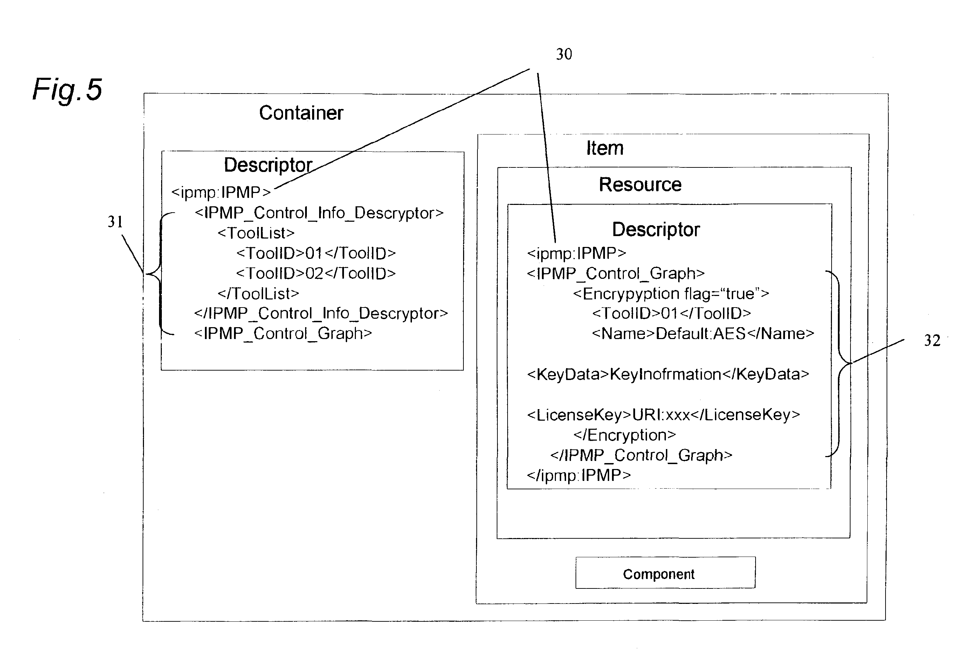

A transmitter according to an embodiment 1 of the present invention will be explained by using Figs. 1 to 5. Fig. 1 is a block diagram showing the configuration of a first transmitter 73 according to the embodiment 1 of the present invention. Fig. 2 is a diagram showing a control graph. Fig. 3 is a diagram showing package information. Fig. 4 is a diagram showing IPMP_DIDL description in a case of protecting an item in a container. Fig. 5 is a diagram showing IPMP_DIDL description in a case of protecting a resource in a component. In Fig. 1, the transmitter 73 includes a tool list generating unit 1, a control graph generating unit 3, an IPMP protection information generating unit 5, a DID information generating unit 7, a packaging unit 9, a video encoding unit 56, an audio encoding unit 57 and an encrypting unit 60.

Next, operation of each component of the transmitter 73 will be explained.

First, the tool list generating unit 1 generates tool list information 2. Note that in the transmitter 73, it is assumed that the presence of a decryption tool, having a tool ID (0X00A) for executing AES descryption, is recognized. The tool generating unit 1 generates the tool list information 2 which is a list of tools required on the receiver side and the like, and supplies it to the IPMP protection information generating unit 5. Here, the tool list generating unit 1 indicates that a decryption tool is required to receive MPEG-2 video bit-stream and decrypt the encryption so as to reproduce it, and generates a tool list having the tool ID (0X00A).

Further, the control graph generating unit 3 generates control graph information 4. Fig. 2 is a schematic diagram showing a part of the configuration of the control graph information 4 generated by the control graph generating unit 3. As shown in Fig. 2, a program A includes an encrypted video bit-stream 63 and an audio bit-stream 64, and has a tool ID 65 corresponding to the encrypted video bit-stream 63 and a control point 66 showing the incorporating position of the tool. The control graph generating unit 3 generates the control graph information 4 including the control point 66 showing that a incorporating position of the tool having the tool ID (0X00A) 65 for executing AES decryption is just before a video decrypting unit of a receiver, and outputs it to the IPMP protection information generating unit 5.

Further, the IPMP protection information generating unit 5 generates IPMP protection information 6 based on the tool list information 2 and the control graph information 4. Moreover, the DID information generating unit 7 generates DID information 8 which is descriptor information including the IPMP protection information 6, and outputs it to the packaging unit 9. Further, the video encoding unit 56 compresses and encodes an inputted digital video signal 49 in conformity with MPEG-2 Video, and outputs it as a video bit-stream 76. The encrypting unit 60 encrypts the video bit-stream 76, and generates the encrypted video bit-stream 63. Further, the audio encoding unit 57 compresses and encodes an inputted digital audio signal 50, and outputs it as an audio bit-stream 64.

Moreover, the packaging unit 9 packages the DID information 8, the encrypted video bit-stream 63 and the audio bit-stream 64, and outputs package information 10. Here, the package information 10 takes a file format or a bit-stream transmission format, specifically.

Fig. 3 is a schematic diagram showing the configuration of the package information 10 conceptually. The package information 10 includes the DID information 8, the encrypted video bit-stream 63 and the audio bit-stream 64, respectively. The DID information 8 includes the IPMP protection information 6, and the IPMP protection information 6 includes the tool list information 2 and the control graph information 4.

Note that although the package information 10 also includes resources themselves of the encrypted video bit-stream 63 and the audio bit-stream 64, it is not always the case. For example, the resources themselves may be stored on an accessible file server or the like, and the package information 10 may store only description showing the storage position of the resources.

In the embodiment 1 of the present invention, video bit-streams are encrypted and protected by IPMP, but audio bit-streams are not protected. Since unprotected data and protected data are often mixed as the present embodiment, it is required to distinguish unprotected cases from protected cases.

In order to distinguish elements governed by IPMP from elements not governed by IPMP and to make the both have the same grammar and meaning, a tag ipmp indicating IPMP protection is provided. In this case, URI (Universal Resource Indentifier) is an identifier used on the Internet defined by IETF (Internet Engineering Task Force) and is an identifier which will never be duplicated in the world, so by allocating URI, tag sets must be distinguished with this method. Since it is complicated to describe URI in every tag, it is defined that in an XML name space, another name is allocated to the URI, which is used as prefix. A first XML description described below shows IPMP_DIDL (Digital Item Declaration Language) for an IPMP name space.

### <First XML description>

```
 IPMP_DIDL
 <?xml version="1.0" encoding="UTF-8"?>
 <xs:schema targetNamespace="urn:mpeg:mpeg21:2002:02-DIDL-NS"
 xmlns:didl="urn:mpeg:mpeg21:2002:02-DIDL-NS"
 xmlns:xs="http://www.w3.org/2001/XMLSchema"
 elementFormDefault="qualified"
 attributeFormDefault="unqualified">
 <xs:include schemaLocation="21000-02-v2_r3.xsd"/>
 <xs:element name="IPMP_Component" substitutionGroup="didl:Component">
 <xs:complexType>
 <xs:complexContent>
 <xs:extension base="didl:ComponentType">
 <xs:sequence>
 <xs:element ref="didl:IPMP_CONTENT"/>
 </xs:sequence>
 </xs:extension>
 </xs:complexContent>
 </xs:complexType>
 </xs:element>
 <xs:element name="IPMP_Container" substitutionGroup="didl:Container">
 <xs:complexType>
 <xs:complexContent>
 <xs:extension base="didl:ContainerType">
 <xs:sequence>
 <xs:element ref="didl:IPMP_CONTENT"/>
 </xs:equence>
 </xs:extension>
 </xs:complexContent>
 </xs:complexType>
 </xs:element>
 <xs:element name="IPMP_Descriptor" substitutionGroup="didl:Descriptor">
 <xs:complexType>
 <xs:complexContent>
 <xs:extension base="didl:DescriptorType">
 <xs:sequence>
 <xs:element ref="didl:IPMP_CONTENT"/>
 </xsaequence>
 </xs:extension>
 </xs:complexContent>
 </xs:complexType>
 </xs:element>
 <xs:element name="IPMP_Item" substitutionGroup="didl:Item">
 <xs:complexType>
 <xs:complexContent>
 <xs:extension base="didl:ItemType">
 <xs:sequence>
 <xs:element ref="didl:IPMP_CONTENT"/>
 </xs:sequence>
 </xs:extension>
 </xs:complexContent>
 </xs:complexType>
 </xs:element>- protect Resource in a Component:
 <Component>
 <IPMP_Resource>
 <ipmp:IPMP>***
 </ipmp:IPMP>
 <IPMP_CONTENT>xxxxxxxxxxxxx</IPMP_CONTENT>
 </IPMP_Resource>
 </Component>

 <xs:element name="IPMP_Resource" substitutionGroup="didl:Resource">
 <xs:complexType mixed="true">
 <xs:complexcontent mixed="true">
 <xs:extension base="didl:ResourceType">
 <xs:sequence>
 <xs:element ref="didl:IPMP_CONTENT"/>
 </xs:sequence>
 </xs:extension>
 </xs:complexContent>
 </xs:complexType>
 </xs:element>
 <xs:element name="IPMP_CONTENT">
 <xs:complexType mixed="true">
 <xs:sequence>
 <xs:any namespace="##any" processContents="lax" minOccurs="0"/>
 </xs:sequence>
 <xs:attribute name="mimeType" type="xsatring"/>
 </xs:complexType>
 </xs:element>
 <xs:element name="IPMP_DIDL" substitutionGroup="didl:DIDL">
 <xs:complexType>
 <xs:complexContent>
 <xs:extension base="didI:DIDLType">
 <xs:sequence>
 <xs:element ref="didl:IPMP_CONTENT"/>
 </xs:sequence>
 </xs:extension>
 </xs:complexContent>
 </xs:complexType>
 </xs:element>
 </xs:schema>
```

In order to be protected by IPMP, it is required to set provisions as IPMP. Since MPEG-2 IPMP and MPEG-4 IPMP have been set as international standards, it is required to consider continuity with them. In order to give IPMP protection, it is required to define a tool list for defining an IPMP tool and a control graph showing the position where the IPMP tool is to be incorporated on the reproduction side. Therefore, in order to give IPMP protection, definition will be given based on a name space indicating the IPMP as follows.

Fig. 4 and a second XML description shown below show a case where IPMP control information and a control graph are described when an item in a container is protected, in which 01 is designated as a tool ID, and AES and key information are designated as encryption tools. In Fig. 4, a tag 30 means a name space indicating IPMP. Further, a description range 31 includes description relating to tool list information 2 of the IPMP control information, and a description range 32 includes description relating to an IPMP control graph 4.

### <Second XML description>

```
 IPMP_DIDL description for protecting an item in a container
 - protect Item in a Container:
 <Container>
 <IPMP_Item>
 <ipmp:IPMP>
 <IPMP_Control_Info_descriptor>
 <TooIList>
 <ToolID>01 </ToolID>
 <ToolID>02</ToolID>
 </ToolList>
 </IPMP_Control_Info_descriptor>
 <IPMP_Control_Graph>
 <Encryption flag="true">
 <ToolID>01 </ToolID>
 <Name>Default:AES</Name>
 <KeyData>Keylnformation</KeyData>
 <LicenseKey>URI:xxx</LicenseKey>
 </Encryption>
 </IPMP_Control_Graph>
 </ipmp:IPMP>
 <IPMP_CONTENT>xxxxxxxxxxxxx</IPMP_CONTENT>
 </IPMP_Item>
 </Container>
```

Fig. 5 and a third XML description show an example of IPMP_DIDL description in which a control graph is described when a resource in a component is protected. They show a case where 01 is designated as a tool ID, and AES and key information are designated as encryption tools. In Fig. 5, a description range 31 includes tool list information, and IPMP control information defines as IPMP control graph information in a description range 32 of the descriptor in the resource.

### <Third XML description>

```
 IPMP_DIDL description for protecting a resource in a component
 - protect Resource in a Component:
 <Component>
 <IPMP_Resource>
 <ipmp:IPMP>
 <IPMP_Control_Graph>
 <Encryption flag="true">
 <ToolID>01 </ToolID>
 <Name>Default:AES</Name>
 <KeyData>Keylnformation</KeyData>
 <LicenseKey>URl:xxx</LicenseKey>
 </Encryption>
 </IPMP_Control_Graph>
 </ipmp:IPMP>
 <IPMP_CONTENT>xxxxxxxxxxxxx</IPMP_CONTENT>
 </IPMP_Resource>
 </Component>
```

As described above, in the transmitter 73, it is possible to download, to a receiver, IPMP protection information including a tool list for decrypting encryption and a tool incorporating position as a part of package information with encrypted data, whereby it is possible to update the tool and always provide the latest protection system. Further, since DID includes IPMP protection information, and the description format thereof has a name space indicating IPMP, it is possible to provide a convenience that it can be defined without being mixed with other descriptions.

### (Embodiment 2)

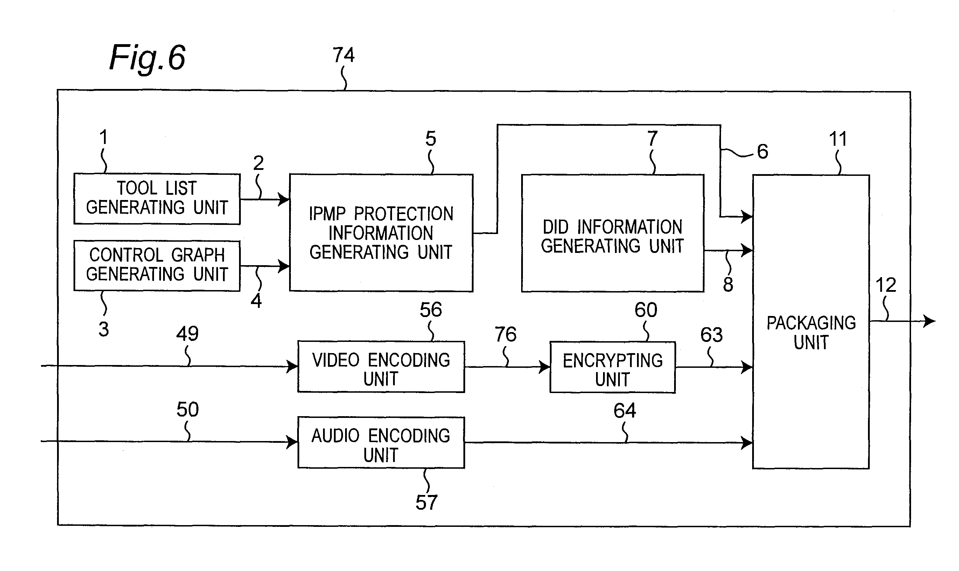

A transmitter 74 according to an embodiment 2 includes, when compared with the transmitter 73 according to the embodiment 1, substantially same components. However, as shown in Fig. 6, there is such a difference that the IPMP protection information 6 generated by the IPMP protection information generating unit is not outputted to the DID information generating unit 7 but is outputted directly to the packaging unit 11.

Fig. 6 is a block diagram showing the configuration of the transmitter of the embodiment 2. Note that in the transmitter 74 in Fig. 6, the tool list generating unit 1, the control graph generating unit 3, the IPMP protection information generating unit 5, the video encoding unit 56, the encrypting unit 60 and the audio encoding unit 57 are same as those of the transmitter according to the embodiment 1. The transmitter 74 is different from the transmitter according to the embodiment 1 in that the DID information generating unit 7 generates DID information 8 not including the IPMP protection information 6. Further, the transmitter 74 is different from the transmitter according to the embodiment 1 in that the packaging unit 11 packages the IPMP information 6 without being included in the DID information 8 and outputs package information 12. The packaging unit 11 packages the encrypted video bit-stream 63, the audio bit-stream 64, the DID information 8 and the IPMP protection information 6, and outputs the package information 10.

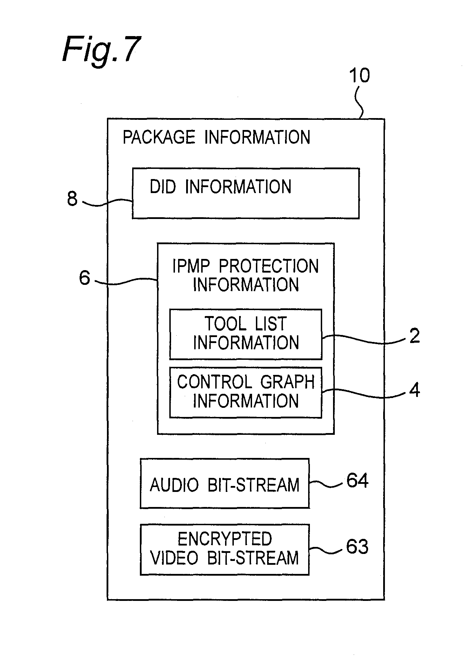

Fig. 7 is a schematic diagram showing the configuration of package information 12. The package information 12 is different from the package information 10 shown in Fig. 3 in that the IPMP protection information 6 is stored outside the DID information 8. Note that other operations are same as those of the embodiment 1.

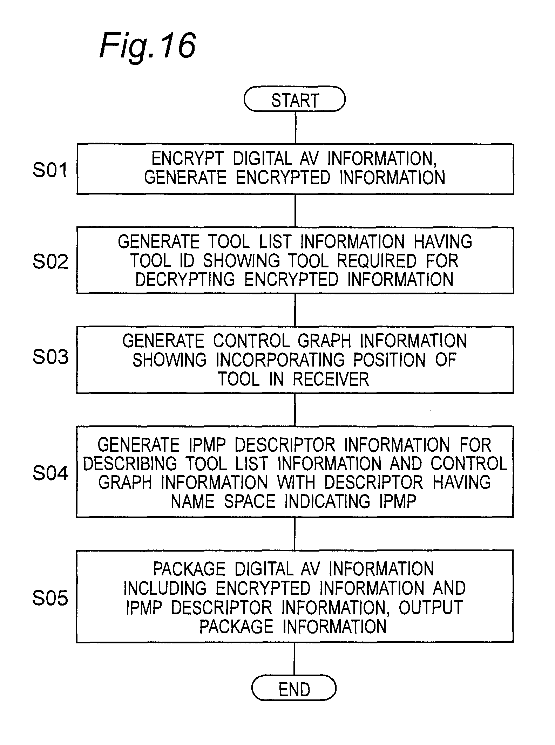

Fig. 16 is a flowchart of a transmitting method according to the embodiment 2. This transmitting method will be explained below.
(a) First, digital AV information is encrypted whereby encrypted information is generated (S01). Note that both of a video bit-stream and an audio bit-stream or either one of them may be encrypted. The type of encryption is not limited particularly.
(b) Next, tool list information having a tool ID indicating tools required for decrypting the encrypted information is generated (S02).
(c) Control graph information showing an incorporating position of the tool in a receiver is generated (S03). The control graph information has a configuration shown in Fig. 2, for example.
(d) IPMP descriptor information for describing the tool list information and the control graph information is generated with a descriptor having a name space indicating IPMP (S04).
(e) Digital AV information including encrypted information and IPMP descriptor information are packaged, and the package information is outputted (S05). In this case, the IPMP descriptor information is stored separate from the DID information as shown in Fig. 7.

In this way, it is possible to output the package information in which the IPMP descriptor information is stored separate from the DID information. This package information is transmitted.

As described above, in the transmitter 74, IPMP protection information including a tool list for decrypting encryption and a tool incorporating position can be downloaded to a receiver as a part of package information with encrypted data, whereby it is possible to update the tool and always provide the latest protection system. Further, since the IPMP protection information is included independent of the DID information, there is an advantage that the IPMP protection information and the DID information can be treated independently. Further, since the description format of the IPMP protection information has a name space indicating IPMP, it is possible to provide a convenience that it can be defined without being mixed with other descriptions.

### (Embodiment 3)

A transmitter according to an embodiment 3 of the present invention is, compared with the transmitter according to the embodiment 1, different in an aspect of having a name space ipmp.

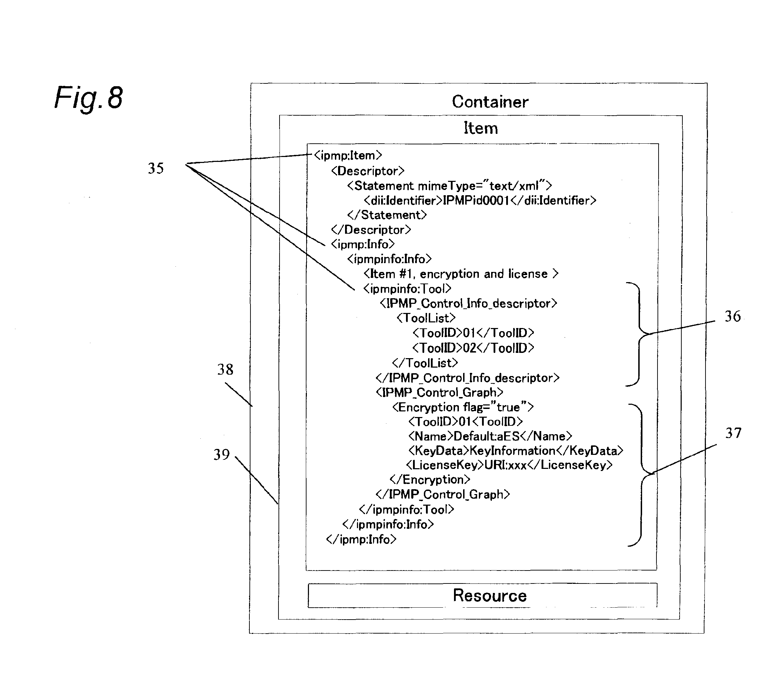

Fig. 8 is a diagram showing description relating to IPMP_DIDL. In Fig. 8, numeral 38 denotes a container, numeral 39 denotes an item, and a tag 35 denotes a name space indicating IPMP or IPMP protection information. A description range 36 shows tool list information, and a description range 37 shows an IPMP control graph.

Although the configuration of the transmitter is the same as those used in the embodiment 1 shown in Figs. 1 to 3, in the embodiment 3, the IPMP_DIDL description shown in Fig. 8 is used instead of Figs. 4 and 5 of the embodiment 1.

In the embodiment 3 of the present invention, although a video bit-stream is encrypted and protected by IPMP as shown in Figs. 1 to 3 and 8, an audio bit-stream is not protected. Since there are many cases where unprotected data and protected data are mixed as in the present embodiment, it is required to distinguish unprotected cases from protected cases.

In order to distinguish elements governed by IPMP from elements not governed by IPMP and to make the both have the same grammar and meaning, a tag ipmp indicating IPMP protection is provided. In a fourth XML description shown below, a name space called ipmp "urn:mpeg:mpeg21:2004:01-IPMP-NS", a name space called ipmpinfo "urn:mpeg:mpeg21:2004:01-IPMPINFO-NS" and the like are defined below the object name space "urn:mpeg:mpeg21:2004:01-IPMPINFO-NS". Further, a child element IPMPToolID and the like are defied by <xsd:xxxxxx>.

### <Fourth XML description>

```
 IPMP_DIDL description
 <?xml version="1.0"?>
  <xsd:schema targetNamespace="urn:mpeg:mpeg21:2004:01-IPMPINFO-NS"
 elementFormDefault="qualified" attributeFormDefault="unqualified"
 version="0.01"
 xmlns:xsd="http://www.w3.org/2001/XMLSchema"
 xmlns:ipmp="urn:mpeg:mpeg21:2004:01-IPMP-NS"
 xmlns:ipmpinfo="urn:mpeg:mpeg21:2004:01-IPMPINFO-NS"
 xmlns:dii="urn:mpeg:mpeg21:2002:01-DII-NS"
 xmlns:r="urn:mpeg:mpeg21:2003:01-REL-R-NS"
 xmlns:dsig="http://www.w3.org/2000/09/xmldsig#">
 <xsd:import namespace="http://www.w3.org/2000/09/xmldsig#"
 schemaLocation="http://www.w3.org/TR/2002/REC-xmldsig-core-20020212/xmldsig-core-schema.xsd"/>
 <xsd:import namespace="urn:mpeg:mpeg21:2003:01-REL-R-NS" schemaLocation="rel-r.xsd"/>
 <xsd:import namespace="urn:mpeg:mpeg21:2002:01-DII-NS" schemaLocation="dii.xsd"/>
 <xsd:element name="Info" type="ipmpinfo:InfoType"/>
 <xsd:complexType name="InfoType">
 <xsd:sequence>
 <xsd:element ref="ipmpinfo:Tool" minOccurs="0" maxOccurs="unbounded"/>
 <xsd:element ref="ipmpinfo:License" minOccurs="0" maxOccurs="unbounded"/>
 <xsd:element ref="dsig:Signature" minOccurs="0"/>
 </xsd:sequence>
 </xsd:complexType>
 <xsd:element name="Tool" type="ipmpinfo:ToolType"/>
 <xsd:complexType name="ToolType">
 <xsd:sequence>
 <xsd:element ref="ipmpinfo:IPMPToolID" minOccurs="0"/>
 <xsd:choice minOccurs="0">
 <xsd:element ref="ipmpinfo:Inline"/>
 <xsd:element ref="ipmpinfo:Remote"/>
 </xsd:choice>
 <xsd:element ref="ipmpinfo:ComplementaryInfo" minOccurs="0"/>
 <xsd:element ref="dsig:Signature" minOccurs="0"/>
 </xsd:sequence>
 <xsd:attribute name="order" type="xsd:positiveInteger"/>
 </xsd:complexType>
 <xsd:element name="IPMPToolID" type="ipmpinfo:IPMPToolIDType"/>
 <xsd:complexType name="IPMPToolIDType">
 <xsd:attribute name="id" type="xsd:positiveInteger"/>
 </xsd:complexType>
 <xsd:element name="Inline" type="ipmpinfo:InlineType"/>
 <xsd:complexType name="InlineType">
 <xsd:sequence>
 <xsd:element ref="ipmpinfo:Binary"/>
 <xsd:choice minOccurs="0">
 <xsd:element ref="ipmpinfo:Info"/>
 <xsd:element ref="dsig:Signature"/>
 </xsd:choice>
 </xsd:sequence>
 </xsd:complexType>
 <xsd:element name="Binary" type="ipmpinfo:BinaryType"/>
 <xsd:complexType name="BinaryType" mixed="true">
 <xsd:sequence>
 <xsd:any namespace="##any" processContents="lax" minOccurs="0" maxOccurs="unbounded"/>
 </xsd:sequence>
 </xsd:complexType>
 <xsd:element name="Remote" type="ipmpinfo:RemoteType"/>
 <xsd:complexType name="RemoteType">
 <xsd:choice minOccurs="0">
 <xsd:element ref="ipmpinfo:Info"/>
 <xsd:element ref="dsig:Signature"/>
 </xsd:choice>
 <xsd:attribute name="ref" type="xsd:anyURI"/>
 </xsd:complexType>
 <xsd:element name="ComplementaryInfo"
 type="ipmpinfo:ComplementarylnfoType"/>
 <xsd:complexType name="ComplementaryInfoType" mixed="true">
 <xsd:sequence>
 <xsd:any namespace="##any" processContents="lax" minOccurs="0"maxOccurs="unbounded"/>
 </xsdaequence>
 </xsd:complexType>
 <xsd:element name="License" type="ipmpinfo:LicenseType"/>
 <xsd:complexType name="LicenseType">
 <xsd:choice maxOccurs="unbounded">
 <xsd:element ref="r:license"/>
 <xsd:element ref="r:licenseGroup"/>
 </xsd:choice>
 </xsd:complexType>
 </xsd:schema>
```

In order to be protected by IPMP, it is required to set provisions as IPMP. Since MPEG-2 IPMP and MPEG-4 IPMP have been set as international standards, it is required to consider continuity with them. In order to give IPMP protection, it is required to define a tool list for defining IPMP tools and a control graph showing the positions where the IPMP tools are to be incorporated on the reproduction side. Therefore, in order to give IPMP protection, definition will be given based on a name space indicating the IPMP as follows.

Fig. 8 is an example of IPMP_DIDL description in a case where 01 is designated as a tool ID, and AES and key information are designated as encryption tools. A tag 35 means a name space indicating IPMP. Further, a description range 36 includes description relating to the tool list information 2 of the IPMP control information, and a description range 37 includes description relating to the IPMP control graph 4.

A fifth XML description below shows the whole ipmp description. In the fifth XML description, rights description is also included in a part <r:License> to </r:License > in the fifth XML description, in addition to the tool list information. For the rights description, MPEG-21 REL, which is a rights description language, may be used, or binary expression may be used without being limited to MPEG-21 REL.

### <Fifth XML description>

```
 ipmp description
 <?xml version="1.0" encoding="UTF-8"?>
 <DIDL xmlns="urn:mpeg:mpeg21:2002:02-DIDL-NS"
 xmlns:ipmp="urn:mpeg:mpeg21:2004:01-IPMP-NS"
 xmlns:ipmpinfo="urn:mpeg:mpeg21:2004:01-IPMPINFO-NS"
 xmlns:dii="urn:mpeg:mpeg21:2002:01-DII-NS"
 xmlns:r="urn:mpeg:mpeg21:2003:01-REL-R-NS"
 xmlns:mx="urn:mpeg:mpeg21:2003:01-REL-MX-NS"
 xmlns:mob="urn:proposed:mobile"
 xmlns:xsi="http://www.w3.org/2001/XMLSchema-instance"
 xsi:schemaLocation="urn:mpeg:mpeg21 :2004:01-IPMP-NS ipmp.xsd
 urn:mpeg:mpeg21:2002:02-DIDL-NS didl.xsd urn:proposed:mobile rel-mob.xsd
 urn:mpeg:mpeg21:2003:01-REL-MX-NS rel-mx.xsd urn:mpeg:mpeg21:2004:01-ipmpinfo.xsd ">
IPMPINFO-NS
 <Container>
 <Descriptor>
 <Statement mimeType="text/plain">Demo DI for IPMP</Statement>
 </Descriptor>
 <ipmp:ltem>
 <Descriptor>
 <Statement mimeType="text/xml">
 <dii:Identifier>IPMPid0001 </dii:Identifier>
 </Statement>
 </Descriptor>
 <ipmp:lnfo>
 <ipmpinfo:lnfo>
 <ltem #1, encryption and license>
 <ipmpinfo:Tool>
 <IPMP_Control_Info_descriptor>
 <ToolList>
 <ToolID>01</ToolID>
 <ToolID>02</ToolID>
 </ToolList>
 </IPMP_Control_Info_descriptor>
 <IPMP_Control_Graph>
 <Encryption flag="true">
 <ToolID>01<ToolID>
 <Name>Default:AES</Name>
 <KeyData>Keylnformation</KeyData>
 <LicenseKey>URl:xxx</LicenseKey>
 </Encryption>
 </IPMP_Control_Graph>
 </ipmpinfo:Tool>
 <ipmpinfo:License>
 <r:license>
 <r:grant>
 <mob:imsiUser>
 <mob:imsildentifier>IMSI:12345678</mob:imsildentifier>
 </mob:imsiUser>
 <mx:play/>
 <mx:diReference>
 <mx:identifier>IPMPid0001 </mx:identifier>
 </mx:di Reference>
 </r:grant>
 </r:license>
 </ipmpinfo:License>
 </ipmpinfo:Info>
 </ipmp:Info>
 <ipmp:Content>
 <Item>
 <Descriptor>
 <Statement mimeType="text/plain">Track 2 License</Statement>
 </Descriptor>
 <Component>
 <Descriptor>
 <Statement mimeType="text/plain">Track 2 Image</Statement>
 </Descriptor>
 <Resource ref="Track 2.png" mimeType="image/png"/>
 </Component>
 <Component>
 <Descriptor>
 <Statement mimeType="text/plain">Track 2 Audio</Statement>
 </Descriptor>
 <Resource ref="Track 2.mp3" mimeType="audio/mpeg"/>
 </Component>
 </Item>
 </ipmp:Content>
```

As described above, according to the transmitter, IPMP protection information including a tool list for decrypting encryption and a tool incorporating position and rights information can be downloaded to a receiver as a part of package information with encrypted data, whereby it is possible to update the tool and always provide the latest protection system. Further, since the IPMP protection information is included independent of the DID information, there is an advantage that the IPMP protection information and the DID information can be treated independently. Further, since the description format of the IPMP protection information has a name space indicating IPMP, it is possible to provide a convenience that it can be defined without being mixed with other descriptions.

Note that although the embodiment 3 is explained in comparison with the embodiment 1, it can be applied in the same manner in the embodiment 2.

### (Embodiment 4)

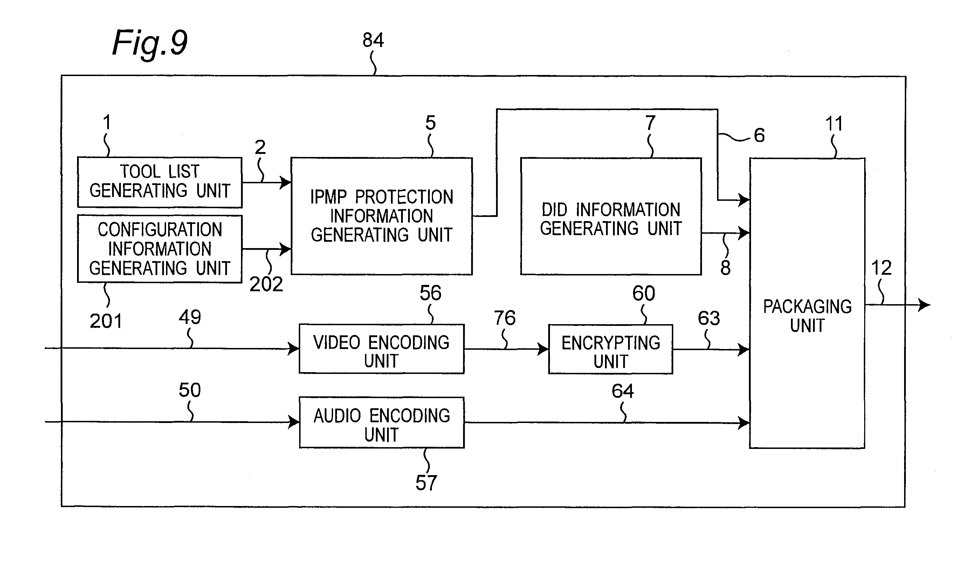

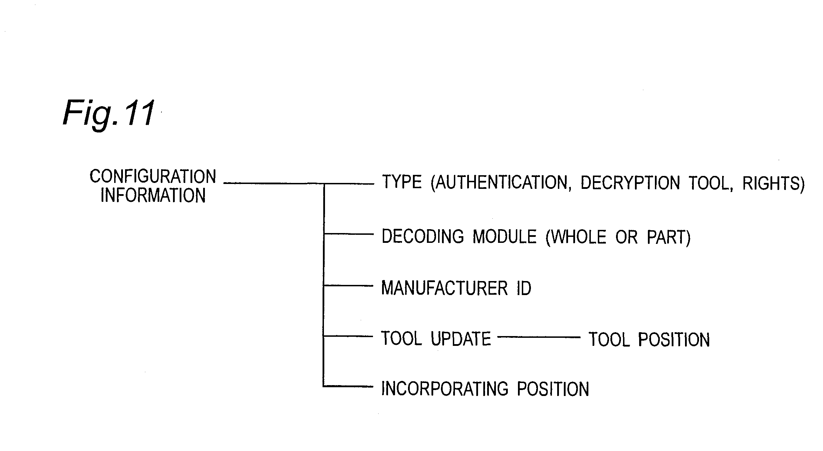

Fig. 9 is a block diagram showing the configuration of a transmitter 84 according to an embodiment 4. Compared with the transmitter according to the embodiment 2, the transmitter 84 according to the embodiment 4 is different in that a configuration information generating unit 201 is provided instead of the control graph generating unit, although other components thereof have substantially the same configurations, as shown in Fig. 9. The configuration information generating unit 201 generates configuration information 202 as shown in Fig. 11.

Fig. 11 is a schematic diagram showing exemplary contents of configuration information. Each item will be explained. First, the type of tool indicates, for example, an authentication tool, a cryptanalysis tool, a rights tool and the like. Further, a decryption module shows the whole or a part. As a manufacturer ID, the manufacturer of a receiver is shown for example, indicating a tool unique to the manufacturer. Tool update indicates whether to update a tool or not. A tool position indicates a position where a tool to be updated exists. An incorporating position indicates a position where the tool is incorporated in a receiver. Note that in the configuration information, not all items are mandatory, but a part thereof should be included. Further, other information may also be included provided it is information showing the configuration.

The packaging unit 11 of the transmitter 84 packages the encrypted video bit-stream 63, the audio bit-stream 64, the DID information 8 and the IPMP protection information 6, and outputs the package information 10.

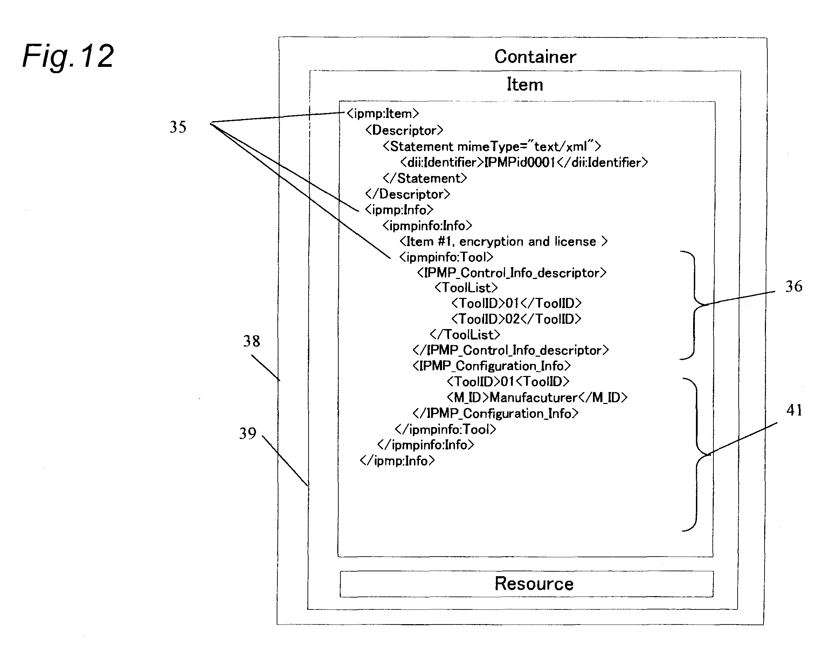

Fig. 12 is description relating to IPMP_DIDL in the package information 12, and a decryption range 41 shows description relating to configuration information. Other IPMP_DIDL descriptions are the same as the fourth XML description. In Fig. 12, the tag 35 means a name space indicating IPMP. Further, the description range 36 includes description relating to the tool list information 2 of the IPMP control information, and a description range 41 includes description relating to the configuration information 202.

A sixth XML description below shows the whole ipmp description. The sixth XML description shows a case where a manufacturer ID is included as configuration information in addition to the tool list information.

### <Sixth XML description>

```
 ipmp description
 <?xml version="1.0" encoding="UTF-8"?>
 <DIDL xmlns="urn:mpeg:mpeg21:2002:02-DIDL-NS"
 xmlns:ipmp="urn:mpeg:mpeg21:2004:01-IPMP-NS"
 xmlns:ipmpinfo="urn:mpeg:mpeg21:2004:01-IPMPINFO-NS"
 xmlns:dii="urn:mpeg:mpeg21:2002:01-DII-NS"
 xmlns:r="urn:mpeg:mpeg21:2003:01-REL-R-NS"
 xmlns:mx="urn:mpeg:mpeg21:2003:01-REL-MX-NS"
 xmlns:mob="urn:proposed:mobile"
 xmlns:xsi="http://www.w3.org/2001/XMLSchema-instance"
 xsi:schemaLocation="urn:mpeg:mpeg21:2004:01-IPMP-NS ipmp.xsd
 urn:mpeg:mpeg21:2002:02-DIDL-NS didl.xsd urn:proposed:mobile rel-mob.xsd
 urn:mpeg:mpeg21:2003:01-REL-MX-NS rel-mx.xsd urn:mpeg:mpeg21:2004:01-
 IPMPINFO-NS
 ipmpinfo.xsd ">
 <Container>
 <Descriptor>
 <Statement mimeType="text/plain">Demo DI for IPMP</Statement>
 </Descriptor>
 <ipmp:ltem>
 <Descriptor>
 <Statement mimeType="text/xml">
 <dii:ldentifier>IPMPid0001</dii:Identifier>
 </Statement>
 </Descriptor>
 <ipmp:lnfo>
 <ipmpinfo:lnfo>
 <Item #1, encryption and license>
 <ipmpinfo:Tool>
 <IPMP_Control_Info_descriptor>
 <ToolList>
 <ToolID>01 </ToolID>
 <ToolID>02</ToolID>
 </ToolList>
 </IPMP_Control_Info_descriptor>
 <IPMP_Configuration_Info>
 <ToolID>01<ToolID>
 <M_ID>Manufacturer</M_ID>
 </IPMP_Configuration_Info>
 </ipmpinfo:Tool>
 <ipmpinfo:License>
 <r:license>
 <r:grant>
 <mob:imsiUser>
 <mob:imsildentifier>IMSI:12345678</mob:imsildentifier>
 </mob:imsiUser>
 <mx:play/>
 <mx:diReference>
 <mx:identifier>IPMPid0001 </mx:identifier>
 </mx:di Reference>
 </r:grant>
 </r:license>
 </ipmpinfo:License>
 </ipmpinfo:lnfo>
 </ipmp:lnfo>
 <ipmp:Content>
 <Item>
 <Descriptor>
 <Statement mimeType="text/plain">Track 2 License</Statement>
 </Descriptor>
 <Component>
 <Descriptor>
 <Statement mimeType="text/plain">Track 2 Image</Statement>
 </Descriptor>
 <Resource ref="Track 2.png" mimeType="image/png"/>
 </Component>
 <Component>
 <Descriptor>
 <Statement mimeType="text/plain">Track 2 Audio</Statement>
 </Descriptor>
 <Resource ref="Track 2.mp3" mimeType="audio/mpeg"/>
 </Component>
 </Item>
 </ipmp:Content>
```

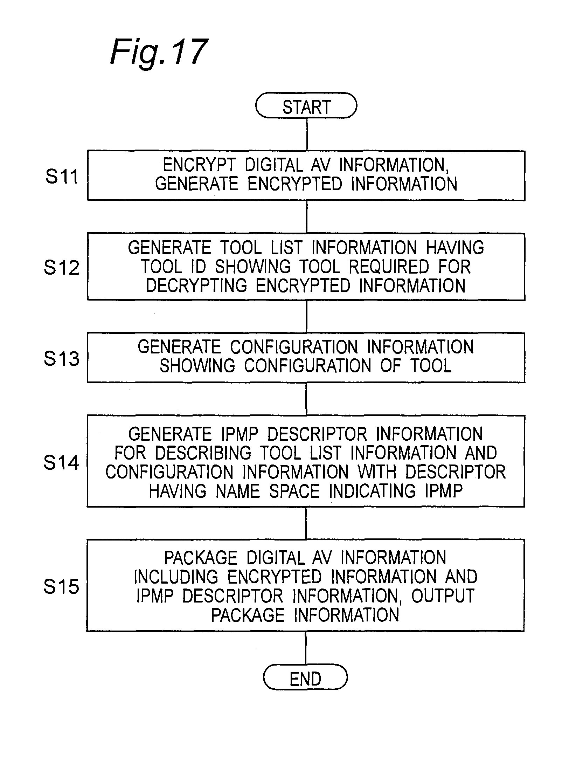

Fig. 17 is a flowchart of a transmitting method according to the embodiment 4. This transmission method will be explained below.
(a) First, digital AV information is encrypted, whereby encrypted information is generated (S11).
(b) Next, tool list information having a tool ID showing a tool required for decrypting encrypted information is generated (S12).
(c) Configuration information indicating the configuration of the tool is generated (S13).
(d) IPMP descriptor information for describing the tool list information and the configuration information is generated with a descriptor having a name space indicating IPMP (S14).
(e) Digital AV information including encrypted information and IPMP descriptor information are packaged, and the package information is outputted (S15).

In this way, it is possible to output the package information in which the IPMP descriptor information is stored separate from the DID information. This package information is transmitted.

As described above, according to the transmitter, IPMP protection information including a tool list for decrypting encryption and configuration information showing the configuration of the tool and rights information can be downloaded to a receiver as a part of package information with encrypted data, whereby it is possible to update the tool and always provide the latest protection system. Further, since the IPMP protection information is included independent of the DID information, there is an advantage that the IPMP protection information and the DID information can be treated independently. Further, since the description format has a name space indicating IPMP, it is possible to provide a convenience that it can be defined without being mixed with other descriptions. Note that other operations are the same as those of the embodiment 2.

### (Embodiment 5)

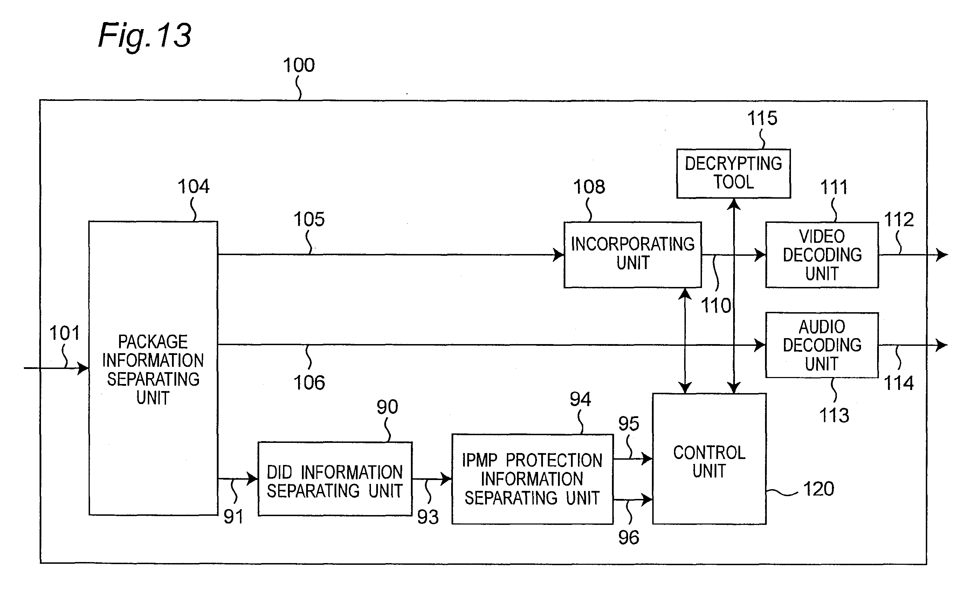

Fig. 13 is a block diagram showing the configuration of a receiver 100 according to an embodiment 5 of the present invention. In Fig. 13, the receiver 100 includes a package information separating unit 104, a DID information separating unit 90, an IPMP protection information separating unit 94, a control unit 120, an incorporating unit 108, a video decoding unit 111, an audio decoding unit 114, and a decryption tool 115. The package information separating unit 104 separates the inputted package information 101 into encrypted bit-stream 105, audio bit-stream 106 and DID information 91. The DID information separating unit 90 extracts IPMP protection information 93 described in a name space indicating IPMP from the DID information 91 and outputs it. The IPMP protection information separating unit 94 extracts the tool list information 95 and the control graph information 96 from the IPMP protection information 93 and outputs them.

Here, the IPMP protection information 93 in the DID information 91 includes a control graph indicating that a tool list having a tool ID (0X00A) for executing AES decryption and the incorporating position of the decryption tool are before the video decoding unit 111 of the receiver 100.

Further, a control unit 120 obtains that a tool required for decryption is a decryption tool 115 from the tool list information 95, and obtains that a control point for applying the decryption tool 115 for decrypting AES encryption, that is, an incorporating position 108, from the control graph information 96. Further, the control unit 120 outputs an instruction for incorporating the decryption tool 115 into the incorporating unit 108 in accordance with the control graph information 94 indicating that the incorporating position of the decryption tool 115 is in front of the video decrypting unit of the receiver 100, and the incorporating unit 108 incorporates the decryption tool 115. A first encrypted video bit-stream 105 is decrypted by the incorporating unit 108 and outputted as a video bit-stream 110. Note that in this embodiment, the receiver 100 is assumed to be connected with the transmitter 73.

The video bit-stream 110 is expanded by the video decoding unit 111 and outputted as a digital video signal 112. The audio bit-stream 106 is expanded by the audio decrypting unit 113 and outputted as a digital audio signal 114.

As described above, according to the embodiment 5 of the present invention, it is possible to decode IPMP protection and to reproduce video signals and audio signals in the case of having IPMP protection information described in a name space indicating IPMP.

### (Embodiment 6)

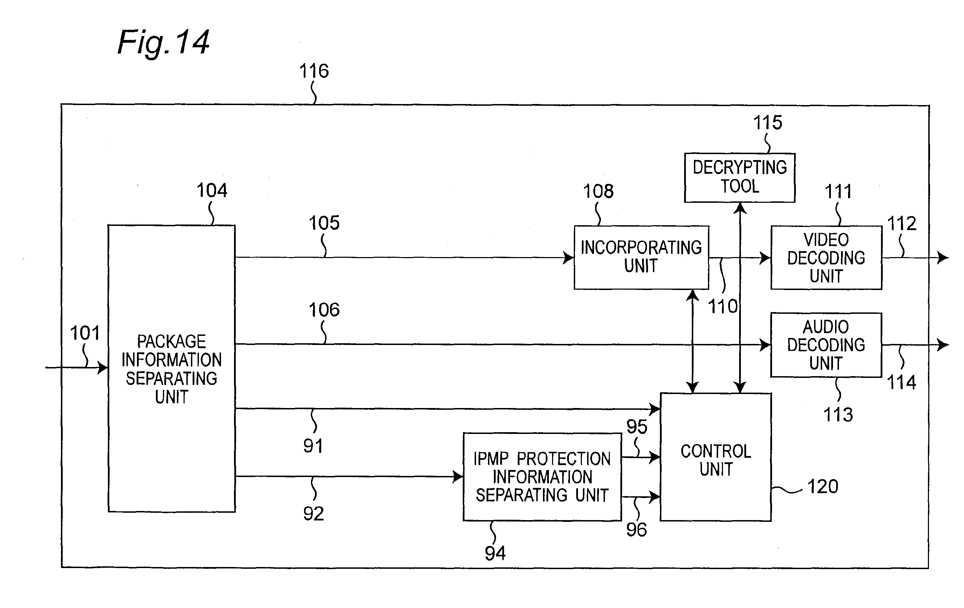

Fig. 14 is a block diagram showing the configuration of a receiver 116 according to an embodiment 6 of the present invention. Comparing with the receiver according to the embodiment 5, the receiver 116 is different in that package information 101 which is packaged such that IPMP protection information is not included in DID information is inputted, as shown in Fig. 7. Along with it, in the receiver 116, the encrypted video bit-stream 105, the audio bit-stream 106, the DID information 91 and the IPMP protection information 92 are separated from the package information 101 by the package information separating unit 104. Note that the IPMP protection information separating unit 94 separates the tool list information 95 and the control graph information 96 from the IPMP protection information 92 and outputs them.

Here, the IPMP protection information 92 includes a control graph indicating that an incorporating position of a tool list having a tool ID (0X00A) for executing AES decryption and the decryption tool is before the video decoding unit 111 of the receiver 100.

Further, the control unit 120 obtains that a tool required for decryption is a decryption tool 115 from the tool list 95, and obtains that a control point for applying a decryption tool 115, that is, an incorporating position 108, from the control graph information 96. Further, the control unit 120 outputs an instruction for incorporating the encryption tool 115 into the incorporating unit 108 in accordance with the control graph information 96 indicating that the incorporating position of the decryption tool 115 is before the video decoding unit of the receiver 100, and the incorporating unit 108 incorporates the decryption tool 115. The first encrypted video bit-stream 105 is decrypted by the incorporating unit 108 and outputted as a video bit-stream 110. Note that in this embodiment, the receiver 116 is assumed to be connected with the transmitter 74 according to the embodiment 2.

The video bit-stream 110 is expanded by the video decoding unit 111 and outputted as a digital video signal 112. The audio bit-stream 106 is expanded by the audio decoding unit 113 and outputted as a digital audio signal 114.

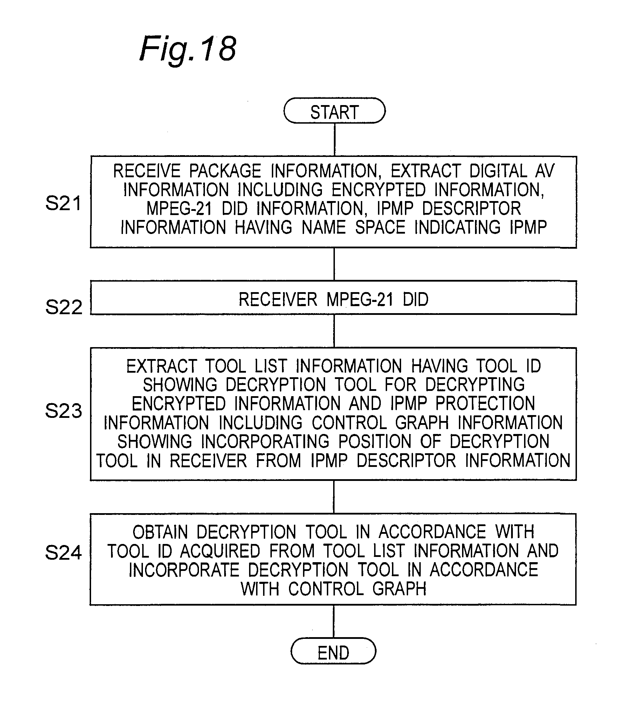

Fig. 18 is a flowchart of a receiving method according to the embodiment 6. This transmission method will be explained below.
(a) First, package information is received, and digital AV information including encrypted information, MPEG-21 DID information and IPMP descriptor information having a name space indicating IPMP are extracted (S21).
(b) Next, MPEG-21 DID is received (S22).
(c) IPMP protection information including tool list information having a tool ID indicating a decryption tool for decrypting encrypted information and control graph information showing the incorporating position of the decryption tool in the receiver are extracted from the IPMP descriptor information (S23).
(d) The decryption tool is obtained in accordance with the tool ID acquired from the tool list information, and the decryption tool is incorporated in accordance with the control graph (S24).

In this way, it is possible to receive package information in which the IPMP descriptor information is stored separate from the DID information. In this receiving method, the IPMP descriptor information is extracted from the package information, and the decryption tool is incorporated according to the tool list information extracted from the IPMP descriptor information, whereby the encrypted information is decrypted.

As described above, according to the receiver of the embodiment 6 of the present invention, in the case of having IPMP protection information described in a name space indicating IPMP, it is possible to decrypt IPMP protection to thereby reproduce video signals and audio signals.

### (Embodiment 7)

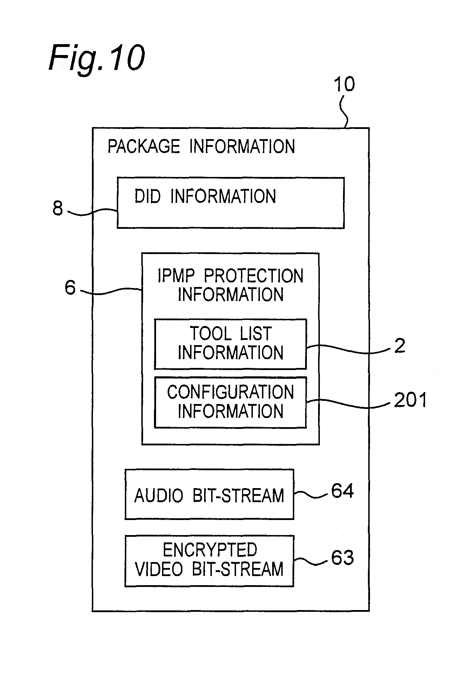

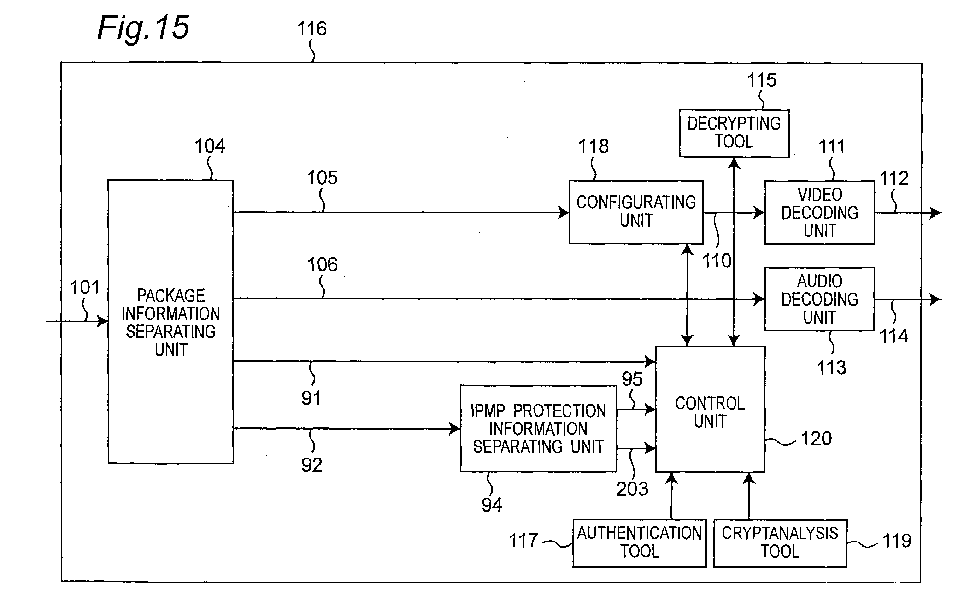

Fig. 15 is a block diagram showing the configuration of a receiver 130 according to an embodiment 7 of the present invention. As shown in Fig. 10, the receiver 130 is different from the receiver according to the embodiment 6 in that package information 101 in which configuration information is stored instead of control graph information in IPMP protection information is inputted. In Fig. 15, compared with the receiver according to the embodiment 6, the receiver 130 is different in that a configuration unit 118 is provided instead of the incorporating unit. Further, the receiver 130 is different from the receiver according to the embodiment 6 in that an authentication tool 117 and a cryptanalysis tool 119 are provided.

The package information separating unit 104 separates the encrypted video bit-stream 105, the audio bit-stream 106, the DID information 91 and the IPMP protection information 92 from the inputted package information 101. Here, the IPMP protection information 92 is assumed to include configuration information 202 showing the configuration of the IPMP tool.

The IPMP protection information separating unit 94 separates the tool list information 95 and the configuration information 203 from the IPMP protection information 92, and outputs them.

The control unit 120 obtains that a tool required for decrypting is a decryption tool 115 from the tool list 95, and obtains that the manufacturer ID is "Manufacturer" from the configuration information 203. The control unit 120 knows that the manufacturer ID is "manufacturer", and instructs the configuration unit 118 operable to combine the authentication tool 117 by the designated manufacturer ID and a cryptanalysis tool 119 including a built in receiving unit. The configuration unit 118 combines the authentication tool 117 that the manufacturer ID is "Manufacturer" and the cryptanalysis tool 119. A first encrypted video bit-stream 105 is decrypted by the configuration unit 118 and outputted as a video bit-stream 110.

The video bit-stream 110 is expanded by the video decoding unit 11 and is outputted as a digital video signal 112. The audio bit-stream 106 is expanded by the audio decoding unit 113 and outputted as a digital audio signal 114. Note that the receiver 130 is assumed to be connected with the transmitter 84 according to the embodiment 4.

Fig, 19 is a flowchart of a receiving method according to the embodiment 7. This transmitting method will be explained below.
(a) First, package information is received, and digital AV information including encrypted information, MPEG-21 DID information and IPMP descriptor information having a name space indicating IPMP are extracted (S31).
(b) Next, MPEG-21 DID is received (S32).
(c) IPMP protection information including tool list information having a tool ID indicating a decryption tool for decrypting encrypted information and configuration information showing the configuration of the decryption tool are extracted from the IPMP descriptor information (S33).
(d) The decryption tool is obtained in accordance with the tool ID acquired from the tool list information, and the decryption tool is incorporated in accordance with the configuration information (S34).

In this way, it is possible to receive package information in which the IPMP descriptor information is stored separate from the DID information. In this receiving method, the IPMP descriptor information is extracted from the package information, and the decryption tool is incorporated according to the tool list information extracted from the IPMP descriptor information, whereby the encrypted information is decoded.

As described above, according to the receiver of the embodiment 7 of the present invention, in the case of having IPMP protection information described in a name space indicating IPMP, it is possible to decrypt IPMP protection including the configuration information of the tool to thereby reproduce video signals and audio signals.

Note that in the embodiments 1 to 7, MPEG-21 DID may be transmitted by being packaged with digital AV information, or transmitted separately by not being packaged.

Further, configuration information is not limited to manufacturer ID, and the type of tool as shown in Fig. 11 may be an authentication tool, a cryptanalysis tool, a rights tool or the like for example. In this case, it is incorporated as a part of function depending on each type. Further, a decoding module may indicate the whole or a part. It may indicate whether a tool is to be updated or not, and as for the tool position, a position where a tool to be updated exists may be shown. In this case, it is possible to incorporate the tool by knowing whether the tool is to be updated or not, and the existing position of the tool which should be updated.

The present invention is applicable in transmitters for transmitting and receivers for receiving digitized video information and audio information.

## Claims

1. A transmitter comprising:
an encrypting unit operable to encrypt at least one of digital AV information and descriptor information relating to the digital AV information, and to generate encrypted information;
a tool list generating unit operable to generate tool list information having a tool ID indicating a tool required for decrypting the encrypted information;
a tool relating information generating unit operable to generate tool relating information relating to the tool;
an IPMP protection information generating unit operable to generate IPMP descriptor information for describing the tool list information and the tool relating information with a descriptor having a name space indicating IPMP or IPMP protection information; and
a packaging unit operable to package the digital AV information including the encrypted information and the IPMP descriptor information and outputting package information.

2. The transmitter according to claim 1, wherein the tool relating information is control graph information indicating an incorporating position of the tool in a receiver, and
wherein the tool relating information generating unit is control graph generating unit operable to generate the control graph information.

3. The transmitter according to claim 1, wherein the tool relating information is configuration information indicating a configuration of the tool, and
wherein the tool relating information genera ting unit is configuration information generating unit operable to generate the configuration information.

4. The transmitter according to claim 2, wherein a child element showing the control graph information is provided below the name space indicating the IPMP or the name space indicating the IPMP protection information.

5. The transmitter according to claim 3, wherein a child element including the configuration information is provided below the name space indicating the IPMP or the name space indicating the IPMP protection information.

6. The transmitter according to any one of claims 1 to 5, wherein a child element showing the tool list information is provided below the name space indicating the IPMP or the name space indicating the IPMP protection information.

7. The transmitter according to any one of claims 1 to 6, wherein a child element showing the tool ID is provided below the name space indicating the IPMP or the name space indicating the IPMP protection information.

8. The transmitter according to any one of claims 1 to 7, wherein a child element including rights description is provided below the name space indicating the IPMP or the name space indicating the IPMP protection information.

9. The transmitter according to any one of claims 1 to 8, wherein a child element including key information is provided below the name space indicating the IPMP or the name space indicating the IPMP protection information.

10. The transmitter according to any one of claims 1 to 9, wherein a child element including license information is provided below the name space indicating the IPMP and the name space indicating the IPMP protection information.

11. The transmitter as claimed in claim 3, wherein the configuration information shows a manufacturer of a receiver.

12. A receiver comprising:
a package information receiving unit operable to receive package information including digital AV information and descriptor information relating to the digital AV information, and extracting digital AV information including encrypted information, MPEG-21 DID information and IPMP descriptor information having a name space indicating IPMP or IPMP protection information;
a MPEG-21 DID receiving unit operable to receive MPEG-21 DID; and
an IPMP protection information extracting unit operable to extract from the IPMP descriptor information, IPMP protection information including tool list information having a tool ID indicating a decryption tool for decrypting the encrypted information and tool relating information relating to the decryption tool,
wherein the decryption tool is obtained according to the tool ID acquired from the tool list information, and the decryption tool is incorporated in accordance with the tool relating information.

13. The receiver according to claim 12, wherein the tool relating information is control graph information indicating an incorporating position of the decryption tool in the receiver.

14. The receiver according to claim 12, wherein the tool relating information is configuration information showing a configuration of the decryption tool.

15. The receiver according to claim 14, wherein the configuration information indicates a manufacturer of the receiver.

16. The receiver according to any one of claims 12 to 15, further comprising a rights information separating unit operable to separate rights information relating to reproduction and duplication on a receiving side from the digital AV information,
wherein the digital AV information is processed in accordance with the rights information.

17. The receiver according to any one of claims 12 to 16, further comprising a key information separating unit operable to decrypt encrypted information received on a receiver side from the digital AV information,
wherein the encrypted information is decrypted by the key information and the digital AV information is extracted.

18. The receiver as claimed in any one of claims 12 to 17, further comprising a license information separating unit operable to separate license information from the digital AV information,
wherein the digital AV information is processed in accordance with the license information.
